# EUROPÄISCHE PATENTANMELDUNG

(11) **EP 2 072 530 A1**
(43) Veröffentlichungstag der Anmeldung: **24.06.2009**
(21) Anmeldenummer: 07024891.9
(22) Anmeldetag: 21.12.2007
(51) Int. Cl.: C08B 1/00, C08B 3/14

(54) **Verfahren zur Herstellung aminogruppenhaltiger Cellulosederivate in ionischer Flüssigkeit**

(71) Anmelder: Dow Wolff Cellulosics GmbH, 29699 Bomlitz (DE)
(72) Erfinder: Brackhagen, Meinolf, 29664 Walsrode (DE); Heinze, Thomas, 07743 Jena (DE); Dorn, Susann, 07751 Milda (DE); Koschella, Andreas, 07743 Jena (DE)
(74) Vertreter: Polypatent

(57) **Zusammenfassung**

Die vorliegende Erfindung betrifft ein Verfahren zur Herstellung aminogruppenhaltiger Cellulosederivate durch Umsetzung von Cellulose mit einem Lactam der allgemeinen Formel (I): 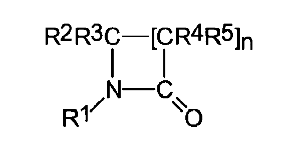 mit n = 2, 3, 4 oder größer; R¹ = H oder einem organischen Rest; und R², R³, R⁴ und R⁵ jeweils unabhängig voneinander = H oder einem organischen Rest; wobei die Umsetzung in einem Lösungsmittel durchgeführt wird, dadurch gekennzeichnet, dass das Lösungsmittel eine ionische Flüssigkeit enthält oder daraus besteht.

## Beschreibung

Die Erfindung betrifft ein Verfahren zur Herstellung aminogruppenhaltiger Cellulosederivate durch Umsetzung von Cellulose mit einem Lactam.

Natürlich vorkommende Polysaccharide, zu denen auch die Cellulosen gehören, mit Amino- und/oder Ammoniumgruppen haben spezifische Funktionen in den Organismen und zeichnen sich durch wichtige Eigenschaften wie Quellbarkeit und/oder Löslichkeit in Wasser, Beeinflussung des Fließverhaltens von wässrigen Systemen und Bioaktivität aus. Ein derartiges Eigenschaftsspektrum ist von synthetischen Polymeren nicht bekannt. Die natürlichen Mucopolysaccharide oder Glycosaminoglucane bestehen aus einer Disaccharid-Wiederholungseinheit, die bevorzugt das Sulfat der 2-Acetamino-D-glucopyranose oder der 2-Acetamino-D-galactopyranose ist. Glycosaminoglucane sind Hauptbestandteil der gelartigen Matrix des Bindegewebes tierischer Lebewesen. Darüber hinaus kommen sie in verschiedenen Schleimen, an Zellmembranen und im Blut vor [G. Ebert, Biopolymere, B. G. Teubner Stuttgart, 1993, 375]. Chitin ist das dominierende Strukturpolysaccharid bei den Arthropoden (Gliederfüßer) und es tritt vor allem im Exoskelett und anderen Körperteilen auf. Andere Organismen, wie Weichtiere, Tintenfische, Pilze, Algen und Bakterien, bilden ebenfalls Chitin. Chemisch gesehen handelt es sich um ein Poly-(β-1,4-N-acetyl-D-glucosamin) unterschiedlicher Zusammensetzung, wobei insbesondere der Anteil an N-acetylierten und deacetylierten Gruppen stark variiert. Chitin und das unterschiedlich stark deacetylierte und unter schwach sauren Bedingungen wasserlösliche Chitosan haben als bioaktives Polymer unterschiedliche Applikationsmöglichkeiten [E. Khor, Chitin: Fulfilling a Biomaterials Promise, Elsevier, Amsterdam, 2001]. Der Nachteil der natürlich vorkommenden Polysaccharide dieser Typen ist die breite strukturelle Variabilität, die ein reproduzierbares Eigenschaftsspektrum unmöglich macht und daher zu vielen Problemen bei der Anwendung führt. Darüber hinaus ist die Gewinnung von Chitin/Chitosan schwierig und technisch sehr aufwendig; proteinfreie Produkte hoher Reinheit sind kaum darstellbar. Gerade bei Anwendungen im biologischmedizinischen und kosmetischen Bereich muss Proteinfreiheit gewährleistet sein.

Seit langem wird daher die Einführung von Amino- und/oder Ammoniumfunktionen durch Derivatisierung von neutralen Polysacchariden erforscht, wobei aufgrund der strukturellen Einheitlichkeit vor allem das Polyglucan Cellulose als Ausgangsverbindung dient. Darüber hinaus ergibt die starre Struktur des Polysaccharidrückgrates durch die β-1-4-glykosidische Verknüpfung spezielle Eigenschaften der wässrigen Lösungen.

Aminogruppenhaltige Cellulosederivate können durch die Umsetzung des Biopolymers mit unterschiedlichen Reagenzien erhalten werden. Nach CS 202374 B1 wird Cellulose in 17-25%iger wässriger NaOH suspendiert und anschließend mit 50%iger wässriger Lösung von (3-Chlor-2-hydroxypropyl)trimethylammoniumchlorid (QUAB 188) bei 50-60°C über 2-4 h umgesetzt. Die heterogene Reaktion begrenzt die Anzahl der einführbaren Ammoniumgruppen. Der erhaltene Celluloseether kann als Ionenaustauscher und/oder Flockungshilfsmittel zur Abwasserreinigung eingesetzt werden.

Gemäß EP 149249 A2 wird Cellulose mit QUAB 188 oder Glycidyltrimethylammoniumchlorid (QUAB 151) umgesetzt. Es werden Produkte mit ebenfalls geringem Gehalt an quartären Ammoniumfunktionen (durchschnittlicher Substitutionsgrad, DS 0,05-0,6) erhalten. Diese Cellulosederivate sind alkohollöslich und zeigen eine gute Spraybarkeit.

Kationische aminogruppenhaltige Derivate mit höherem DS können nach WO 9615154 A1 durch die Umsetzung von Cellulose in Wasser oder Ethanol-Suspension mit QUAB 151 und QUAB 188 in Gegenwart von NaOH gewonnen werden. Durch Einsatz eines sehr hohen Reagenzüberschusses bezogen auf die Cellulose (20 mol Reagenz pro mol Anhydroglucoseeinheit) konnten DS-Werte bis 2,5 erreicht werden. Der überwiegende Teil des Reagenzes (bis zu 87,5%) wird in ungewünschten Nebenreaktionen verbraucht, insbesondere durch Hydrolyse. Es ist eine aufwendige Abtrennung der Nebenprodukte erforderlich.

Nach CN 1223315 A1 können in Gegenwart von 30%iger wässriger Natronlauge neben (2-Hydroxypropyl)trimethylammonium- auch (2-Hydroxypropyl)-triethylammonium- und 2-Hydroxypropyl-pyridinium-Gruppen in das Polysaccharid eingeführt werden. Trotz des Einsatzes eines hohen Reagenzüberschusses (Molverhältnisse von 10 mol Reagenz pro mol Anhydroglucoseeinheit sind üblich) und einer Reaktionstemperatur von 56°C über 1,5 h, werden Produkte mit nur sehr niedrigen DS-Werten erhalten.

Es ist ebenfalls bekannt, dass Ammoniumfunktionen in das Biopolymer Cellulose in zwei Synthesestufen eingeführt werden können. Nach einer Hydroxyethylierung der Cellulose erfolgt die Einführung der kationischen Gruppen. Die Hydroxyethylcellulose wird dazu in wässriger Lösung (bis zu 3%) mit Benzyltriethylammoniumhydroxid bei Raumtemperatur innerhalb von 2 h umgesetzt. Im Vergleich zur heterogenen Verfahrensweise ausgehend von unmodifizierter Cellulose erreicht man eine 50%ige Steigerung des Gesamtsubstitutionsgrades, der allerdings Werte von 0,22 nicht übersteigt. [M. Pasteka, Acta Polymerica, 1986, 37(11-12), 674.]. Die Zweistufensynthese mit Isolierung der in der ersten Stufe hergestellten Hydroxyalkylcellulose ist aufwendig und kostenintensiv.

Nach Nichifor et al. können mit N-(1-Chlorethyl)-N,N-diethylamin und Glycidyltrialkylammoniumchlorid sowohl tertiäre als auch quartäre Aminogruppen in die Cellulose eingeführt werden, wobei allerdings nur sehr geringe Substitutionsgrade realisierbar sind [M. Nichifor, D. Cristea, G. Mocanu und A. Carpov, Journal of Biomaterials Science, Polymer Edition, 1998, 9(6), 519].

Nach DE 1946722 A1 erfolgt die Herstellung von wasserlöslichen Cellulosederivaten durch Verknetung von wasserlöslicher Hydroxyethylcellulose oder Carboxymethylcellulose mit N-(2-Chlorethyl)-N,N-diethylammoniumchlorid in einer organisch/wässrigen Suspension. Trotz des Einsatzes von 3 mol Reagenz pro mol Anhydroglucoseeinheit liegen die DS-Werte der Produkte in einem Bereich von 0,3 bis 1,0. Bei Umsetzung von N-(2-Chlorethyl)-N,N-diethylammoniumchlorid treten darüber hinaus Nebenreaktion auf; es bilden sich Seitenketten durch den Angriff des Reagenzes an die bereits an das Polymer gebundenen funktionellen Gruppen, was zu nicht reproduzierbaren Strukturen und Eigenschaften führen kann. Das Arbeiten mit leicht brennbaren Lösemitteln birgt ebenfalls ein erhöhtes Prozessrisiko. In diesem Fall ist bei der Produktisolierung und -reinigung ein höherer Sicherheitsstandard zu gewährleisten.

Nach WO 2006010468 A1 und WO 2006010470 A1 ist bekannt, dass durch heterogene Umsetzung von Alkalicellulose in Wasser mit Reagenzien der allgemeinen Formel X-(CH₂)ₙ-NR₁R₂, wobei X die Abgangsgruppe ist, kationische aminogruppenhaltige Cellulosederivate mit unterschiedlichen Substitutionsgraden hergestellt werden können.

Nachteilig bei allen bekannten Methoden ist die Umwandlung der Cellulose in Alkalicellulose, wodurch unter den basischen Bedingungen Abbauprozesse hervorgerufen werden können.

Bezüglich der chemischen Bindung zwischen Polymerrückgrat und funktioneller Gruppe handelt es sich bei den beschriebenen aminogruppenhaltigen, kationischen Derivaten um Celluloseether. Etherbindungen weisen bei neutralem pH-Wert und sogar im basischem oder im sauren Milieu eine hohe Stabilität auf; ein biologischer Abbau dieser Produkte durch Enzyme erfolgt nicht [S. Richardson, J. Lundqvist, B. Wittgren, F. Tjerneld und L. Gorton, Biomacromolecules, 2002, 3, 1359].

Demgegenüber hydrolysieren Cellulosederivate, deren funktionelle Gruppen über eine Esterstruktur gebunden sind bereits im wässrigen Milieu. Die Reaktionsgeschwindigkeit der Hydrolyse steigt bei Säure- oder Basenkatalyse signifikant an. Durch die Hydrolyse entsteht das ursprüngliche Polysaccharid, das durch das entsprechende natürliche Enzymsystem problemlos degradiert wird [Th. Heinze, T. Liebert und A. Koschella, Esterification of Polysaccharides, Springer Verlag, Heidelberg, 2006].

Es ist bekannt, dass man Cellulose gelöst in N,N-Dimethylacetamid/LiCl mit N-Methylpyrrolidon in Gegenwart von Tosylchlorid und Pyridin zu einem wasserlöslichen kationischen aminogruppenhaltigen Celluloseester umsetzen kann [C. L. McCormick und T. R. Dawsey, Macromolecules, 1990, 23, 3606]. Sehr gering konzentrierte Celluloselösungen von 1% Polymer wurden 12 h lang mit 11 mol N-Methylpyrrolidon pro mol Wiederholungseinheit zur Reaktion gebracht. Die Struktur des kationischen Celluloseesters wurde durch IR- und NMR-Spektroskopie belegt; DS-Werte wurden hingegen nicht bestimmt. Das eingesetzte Lösemittel N,N-Dimethylacetamid/LiCl kann nach der Reaktion nur unter extremem Aufwand wiedergewonnen werden. Nachteilig sind darüber hinaus das hohe Molverhältnis Reagenz zu Cellulose und die geringe Konzentration der Lösung.
Die gemäß diesem Verfahren erhaltenen Produkte weisen in der Regel eine gelbliche Färbung auf.

Der Einsatz ionischer Flüssigkeiten als Reaktionsmedium in der Cellulosechemie ist zum Teil bekannt, zum Beispiel bei der Herstellung von Celluloseethern gemäß WO 2005054298 A1. Neben den allgemein bekannten Vorteilen verglichen mit herkömmlichen Lösungsmitteln wie etwa geringe Entflammbarkeit, Minimierung gasförmiger Emissionen aufgrund eines kaum messbaren Dampfdrucks und einer hohen Lösekraft, werden in der WO 2005054298 A1 weitere Vorteile für die dortige Verwendung ionischer Flüssigkeiten als Reaktionsmedium genannt. Unter Zuhilfenahme von Mikrowellenstrahlung werde ein hohes Lösungsvermögen erzielt, wodurch ein Überschuss an Reagenzien vermieden werden könne. Es wird weiterhin beschrieben, dass es darüber hinaus möglich sei, bei milden Reaktionsbedingungen zu arbeiten, beispielsgemäß bei 100°C und unter weiterer Zuhilfenahme von Mikrowellenstrahlung. Im Ergebnis können auf schnelle und ökonomische Weise hochsubstituierte Celluloseether erhalten werden.

Ionische Flüssigkeiten sind auch als Lösemittel zur homogenen Acylierung mit aliphatischen Carbonsäuren und zur Carbanilierung von Cellulose erforscht worden (J. Wu, J. Zhang, J. He, Q. Ren und M. Guo, Biomacromolecules, 2004, 5, 266; T. Heinze, K. Schwikal und S. Barthel, Macromol. Biosci., 2005, 5, 520; S. Barthel und T. Heinze, Green Chem., 2006, 8, 301). Die dort genannten vorteilhaften Eigenschaften ionischer Flüssigkeiten wurden im Wesentlichen auch schon in der oben genannten WO 2005054298 A1 beschrieben. Die beschriebenen Acylierungs- bzw. Carbanilierungsreaktionen werden beispielsgemäß bei mindestens 80°C durchgeführt.

Der Erfindung liegt die Aufgabe zu Grunde, ein effektives Verfahren zur Herstellung von aminogruppenhaltigen Cellulosederivaten mit variablem, jedoch vergleichsweise hohem DS bereitzustellen, welches bei einer möglichst niedrigen Temperatur betrieben werden kann und wobei Produkte erhalten werden, die weitgehend frei von z.B. gelblichen Verfärbungen sind.

Diese Aufgabe wird erfindungsgemäß durch ein Verfahren gelöst umfassend die Umsetzung von Cellulose mit einem Lactam der allgemeinen Formel (I): 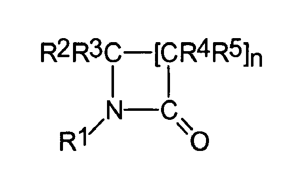 mit n = mindestens 2, vorzugsweise 2 bis 8, weiter bevorzugt 2 bis 6, noch weiter bevorzugt 2 bis 5, am meisten bevorzugt 2, 3 oder 4; R¹ = H oder einem organischen Rest, insbesondere Alkyl, bevorzugt Methyl; und R², R³, R⁴ und R⁵ jeweils unabhängig voneinander = H oder einem organischen Rest, vorzugsweise H; wobei die Umsetzung in einem Lösungsmittel durchgeführt wird, dadurch gekennzeichnet, dass das Lösungsmittel eine ionische Flüssigkeit enthält oder daraus besteht.

Die organischen Reste R¹, R², R³, R⁴ und R⁵ können auch jeweils unabhängig voneinander Alkoxy-, Oligoalkylenoxy-, Alkylthio-, Oligoalkylenthio-, Aryl-, Aralkyl-, kondensierte Aromaten, aromatisch und kondensiert-aromatisch substituierte Alkyl- und Alkylen-Reste sein. Als Alkylsubstituenten für R¹ bis R⁵ kommen unabhängig voneinander insbesondere C₁- bis C₂₀-, vorzugsweise C₁- bis C₁₀-Alkylgruppen in Frage, beispielsweise Methyl-, Ethyl-, Propyl- Butyl-, Pentyl-, Hexyl-, Heptyl-, Octyl-, Nonyl- oder Decylgruppen. Die Alkylsubstituenten können oxy- oder thiosubstituierte Alkylgruppen sein.

Bevorzugt eingesetzte Lactame sind N-Methyl-2-pyrrolidon, ε-Caprolactam, N-Methyl-ε-Caprolactam und N-Methyl-2-piperidon.

Im Gegensatz zu herkömmlichen Methoden der homogenen Cellulosefunktionalisierung kann bei dem erfindungsgemäßen Verfahren die Konzentration der eingesetzten Cellulose 2 bis 35 Gew.-%, bevorzugt 3 bis 25 Gew.-%, weiter bevorzugt 5 bis 20 Gew.-%, besonders bevorzugt 8 bis 15 Gew.-% bezogen auf die ionische Flüssigkeit betragen.

In einer bevorzugten Ausführungsform der Erfindung wird das umzusetzende Lactam durch eine organische Lewis-Säure wie ein Sulfonsäurechlorid, Bortrifluorid, Bortrifluorid-Diethylether-Komplex, Bortrichlorid, Bortrichlorid-Diethylether-Komplex, Zink(II)chlorid oder Phosphorylchlorid aktiviert. Bevorzugt wird ein Sulfonsäurechlorid wie Trifluormethansulfonylchlorid, Methansulfonylchlorid oder besonders bevorzugt p-Toluensulfonylchlorid eingesetzt. Dabei liegt das Molverhältnis Lactam zu Lewis-Säure vorzugsweise im Bereich von 1:0,4 bis 1:2, weiter bevorzugt im Bereich von 1:0,6 bis 1:1,5, besonders bevorzugt im Bereich von 1:0,8 bis 1:1,2.

Das Molverhältnis Anhydroglucoseeinheit zu Lactam liegt vorzugsweise im Bereich von 1:1 bis 1:4, weiter bevorzugt im Bereich von 1:1,5 bis 1:2,5, besonders bevorzugt im Bereich von 1:1,8 bis 1:2,2.

Ein oftmals ideales Molverhältnis ist zum Beispiel 1 : 2 : 2 für Anhydroglucoseeinheit zu Lactam zu Lewis-Säure.

Zur Erzielung unterschiedlicher Molmassen können Cellulosen mit Durchschnittspolymerisationsgraden (DPₙ) von 200 bis 5000, bevorzugt von 350 bis 1200 ohne Änderung der Verfahrensweise eingesetzt werden. Zur Bestimmung des DPₙ wird mittels Gelpermeationschromatographie die zahlenmittlere Molmasse (Mₙ) ermittelt und dieser Wert durch die Molmasse der modifizierten Anhydroglucoseeinheit dividiert.

Die Umsetzung der Cellulose mit dem Lactam wird vorzugsweise bei Temperaturen im Bereich von 10 bis 80°C, weiter bevorzugt 15 bis 60°C, am meisten bevorzugt im Bereich von 20 bis 40°C durchgeführt.

Als Cellulosequelle eignen sich alle kommerziellen Zellstoffe, z.B. Chemie- oder Papierzellstoffe, mikrokristalline Cellulose, Linterscellulose oder Bakteriencellulose.

Bevorzugte ionische Flüssigkeit fallen unter die allgemeine Formel 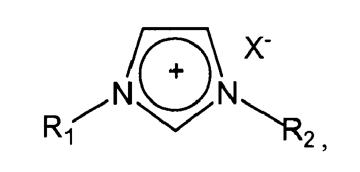 wobei X⁻ für ein Anion, bevorzugt Chlorid, Bromid, Formiat oder Acetat steht und die Reste R₁ und R₂ unabhängig voneinander organische Substituenten, insbesondere aliphatische Substituenten mit 1 bis 8 C-Atomen, besonders bevorzugt 1 bis 4 C-Atomen, bedeuten.

Wie erwähnt, kann das Lösungsmittel für die Umsetzung der Cellulose mit dem Lactam die ionische Flüssigkeit enthalten oder daraus bestehen. Die Celluloselösungen in ionischen Flüssigkeiten können also mit aprotisch-dipolaren Lösungsmitteln wie Dimethylsulfoxid, *N,N*-Dimethylformamid, *N,N-*Dimethylacetamid im Prinzip in jedem Mischungsverhältnis verdünnt werden. Der Anteil an aprotisch-dipolarem Lösungsmittel bezogen auf die Mischung beträgt gegebenenfalls vorzugsweise bis 50 Gew.-%, weiter bevorzugt bis 30 Gew.-%, und noch weiter bevorzugt bis 10 Gew.-%. Am meisten bevorzugt werden jedoch die reinen ionischen Flüssigkeiten verwendet. Eine spezielle Aufreinigung ist nicht erforderlich. Die Celluloselösungen tolerieren einen Wassergehalt von 20 Gew.-%, bevorzugt von 10 Gew.-% bezogen auf die ionische Flüssigkeit bzw. die Mischung.

Beispiele für bevorzugte ionische Flüssigkeiten sind 1-N-Butyl-3-N-methyl-imidazoliumchlorid (BMIMCI), 1-N-Butyl-3-N-methyl-imidazoliumacetat (BMIMAc), 1-N-Butyl-3-N-methyl-imidazoliumformiat (BMIM formiat), 1-N-Ethyl-3-N-methyl-imidazoliumchlorid (EMIMCI), 1-N-Ethyl-3-N-methyl-imidazoliumacetat (EMIMAc), 1-N-Ethyl-3-N-methyl-imidazoliumformiat (EMIM formiat). Eine besonders bevorzugte ionische Flüssigkeit ist 1-N-Butyl-3-N-methyl-imidazoliumchlorid (BMIMCI).

Weitere Klassen von ionische Flüssigkeiten sind grundsätzlich ebenfalls als Lösungsmittel für die Umsetzung der Cellulose mit einem Lactam geeignet. Die in folgender Abbildung gezeigten Kationen können mit jedem der gezeigten Anionen eine ionische Flüssigkeit bilden, die im Prinzip erfindungsgemäß eingesetzt werden kann.

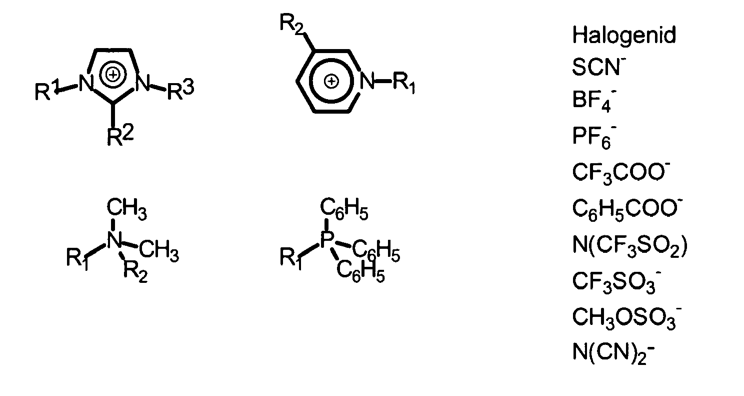

Die Reste R₁ und R₂ der oben gezeigten Formeln können unabhängig voneinander organische Substituenten, insbesondere aliphatische Substituenten mit 1 bis 8 C-Atomen, besonders bevorzugt 1 bis 4 C-Atomen, bedeuten.

Ein erfindungsgemäßes Verfahren umfasst zum Beispiel die folgenden Schritte:
a) Lösen der Cellulose in der ionischen Flüssigkeit oder dem Lösungsmittel enthaltend die ionische Flüssigkeit;
b) Zugabe des Lactams zur Lösung aus Schritt a),
c) gegebenenfalls Zugabe der organischen Lewis-Säure, vorzugsweise gelöst in einem dipolaren aprotischen Lösungsmittel, zur nach Schritt b) erhaltenen Lösung, oder Zugabe der Lewis-Säure zunächst zum Lactam und anschließende Zugabe des erhaltenen Gemisches zur Lösung aus Schritt a),
d) Reagieren lassen unter Rühren, vorzugsweise beträgt die Reaktionszeit 4 bis 6 Stunden, und
e) Isolieren des Produkts nach dem Beendigen der Reaktion, vorzugsweise durch die Schritte, die die Zugabe von Wasser, weiteres Rühren, Ausfällen und anschließendes Trocknen umfassen.

In diesem beispielhaften Verfahren werden die Schritte b), c) und/oder d) vorzugsweise bei Temperaturen im Bereich von 10 bis 80°C, weiter bevorzugt 15 bis 60°C, am meisten bevorzugt im Bereich von 20 bis 40°C, durchgeführt.

Im Gegensatz zur bekannten Umsetzung von Cellulose in N-Methylpyrrolidon/LiCl mit Tosylchlorid/Pyridin ist im erfindungsgemäßen Verfahren während der Umsetzung der Cellulose mit dem Lactam in der Reaktionslösung kein Pyridin-Zusatz erforderlich. Das Reagenz N-Methylpyrrolidon bewirkt gleichzeitig die Verdünnung der viskosen Reaktionsmischung. Lediglich bei festen Lactamen (ε-Caprolactam, N-Methyl-ε-caprolactam) kann die zusätzliche Verwendung geringer Mengen des hochsiedenden Lösemittels N,N-Dimethylacetamid als Verdünnungsmittel erfolgen. In Ionischen Flüssigkeiten erfolgt ein effizienterer Umsatz der Lactame.

Das Polymer wird in herkömmlicher Art und Weise gefällt, z.B. in Aceton/Ethanol, filtriert, gewaschen, z.B. mit Aceton/Ethanol und getrocknet. Die ionische Flüssigkeit kann recyclisiert werden. Es sind aminogruppenhaltige Cellulosederivate mit einem durchschnittlichen Substitutionsgrad im Bereich von 0,05 bis 2,0, bevorzugt von 0,3 bis 1,2 herstellbar. Die Celluloseester sind frei von Ionischer Flüssigkeit und lösen sich in Wasser und Dimethylsulfoxid.

Anhand der nachfolgend angeführten Beispiele soll die vorliegende Erfindung näher erläutert werden.

### Beispiele

### Vergleichsbeispiel 1

3,0 g (18 mmol) Cellulose mit einem durchschnittlichen Polymerisationsgrad von 650 werden mit 50 ml einer wässrigen NaOH-Lösung (17,5% w/w) 24 h bei 0°C gerührt. Nach dem Absaugen wird mit verdünnter Essigsäure neutralisiert und mit Wasser gewaschen. Das Polymer wird in 50 ml trockenem Methanol 3 h gerührt und abgesaugt. Diese Prozedur wird zweimal mit jeweils 50 ml Methanol, zweimal mit 50 ml Aceton und zweimal mit 50 ml Hexan wiederholt. Das abgesaugte Polymer wird in 100 ml N-Methyl-2-pyrrolidon suspendiert und nach Zugabe von 35 ml Pyridin und 13 g (68 mmol) Tosylchlorid 5 h bei Raumtemperatur gerührt. Danach werden 10 ml Wasser zugegeben und weitere 30 min gerührt, bevor der Ansatz in eine Aceton/Ethanol-Mischung (50/50, v/v) gegeben wird. Nach Absaugen und Waschen in einem Aceton/Ethanol Gemisch wird das Produkt bei 60°C im Vakuum getrocknet.

Das Produkt enthält 1,40%N (durchschnittlicher Substitutionsgrad 0,19). Die Probe ist in Wasser und Dimethylsulfoxid unlöslich.

Ausbeute: 3,0 g. IR (KBr): 3440 ν(NH₂), 1683 δ(NH₂), 2892 ν(CH₂), 1730 v(C=O) cm⁻¹.

### Vergleichsbeispiel 2

1 g (6,2 mmol) Cellulose mit einem durchschnittlichen Polymerisationsgrad von 875 wird in 100 ml N-Methyl-2-pyrrolidon (NMP) suspendiert und 2 h bei 105°C gerührt. Anschließend erfolgt die Zugabe von 9 g Lithiumchlorid. Nach 2 h Rühren unter Abkühlung auf Raumtemperatur werden der klaren Lösung 11,2 ml (68,2 mmol) Pyridin und nach weiteren 10 min Rühren 27,2 g (68,2 mmol) Tosylchlorid zugegeben. Die Mischung wird nach 5 h Rühren bei Raumtemperatur mit 10 ml Wasser versetzt und weitere 30 min gerührt. Die Mischung wird in ein AcetonEthanol-Gemisch (40/60, v/v) gegeben, das Polymer abfiltriert, mit einer Mischung aus Aceton und Ethanol (40/60, v/v) gewaschen und anschließend im Vakuum bei 60°C (1,5 x10⁻³ Torr) getrocknet.

Das Produkt enthält 4,4% N (durchschnittlicher Substitutionsgrad 0,9) und ist in Wasser und Dimethylsulfoxid löslich.

Ausbeute: 1,70 g (98,3 %). IR (KBr): 3410 ν(NH₂), 1679 δ(NH₂), 2960 ν(CH₂), 2914 ν(CH₃), 1728 ν(C=O) cm⁻¹.

### Beispiel 1

0,5 g (3 mmol) mikrokristalline Cellulose mit einem durchschnittlichen Polymerisationsgrad von 290 werden in 4,5 g 1-N-Butyl-3-N-methyl-imidazoliumchlorid bei 80°C innerhalb von 12 h gelöst. Die Lösung wird mit 10 ml N-Methyl-2-pyrrolidon versetzt. Nach dem Abkühlen auf Raumtemperatur gibt man 1,14 g (6 mmol) Tosylchlorid in 0,58 ml (6 mmol) N-Methyl-2-pyrrolidon zu. Zur Mischung werden nach 5 h Rühren bei Raumtemperatur 5 ml Wasser zugefügt und die Reaktion weitere 30 min bei Raumtemperatur unter Rühren fortgeführt. Anschließend isoliert man das Produkt durch Fällen in 200 ml einer Mischung aus Aceton und Ethanol (60/40, v/v). Das Polymer wird abfiltriert, zweimal mit 100 ml einer Mischung aus Aceton und Ethanol (60/40, v/v) gewaschen und anschließend bei 60°C im Vakuum (1,5 x 10⁻³ Torr) getrocknet.

Das Produkt enthält 3,87% N, was einem durchschnittlichen Substitutionsgrad von 0,82 entspricht. Die Probe ist in Wasser und Dimethylsulfoxid löslich.

Ausbeute: 0,76 g (92,7%). IR (KBr): 3371 ν(NH₂), 1684 δ(NH₂), 2918 ν(CH₂), 2893 ν(CH₃), 1739 v(C=O) cm⁻¹. ¹³C-NMR (D₂O): 174.4 (C=O),102.9 (C-1), 79.6 (C-4), 73.9, 72.8 (C-2,3,5), 62.9 (C-6), 48.2, 29.4, 20.7 (CH₂), 32.8 (CH₃) ppm.

### Beispiel 2

0,5 g (3 mmol) mikrokristalline Cellulose mit einem durchschnittlichen Polymerisationsgrad von 290 werden in 4,5 g 1-N-Butyl-3-N-methyl-imidazoliumchlorid bei 80°C innerhalb von 12 h gelöst. Nach dem Abkühlen auf Raumtemperatur fügt man 1,14 g (6 mmol) Tosylchlorid in 0,58 ml (6 mmol) N-Methyl-2-pyrrolidon zu. Zur Mischung werden nach 5 h Rühren bei Raumtemperatur 5 ml Wasser zugegeben und die Reaktion weitere 30 min bei Raumtemperatur unter Rühren fortgeführt. Anschließend isoliert man das Produkt durch Fällen in 200 ml einer Mischung aus Aceton und Ethanol (50/50, v/v). Das Polymer wird abfiltriert, zweimal mit 100 ml einer Mischung aus Aceton und Ethanol (50/50, v/v) gewaschen und anschließend bei 60°C im Vakuum (1,5 x 10⁻³ Torr) getrocknet.

Das Produkt enthält 2,13% N und besitzt demnach einen durchschnittlichen Substitutionsgrad von 0,3. Die Probe ist in Wasser und Dimethylsulfoxid löslich.

Ausbeute: 0,46 g (77,1%). IR (KBr): 3370 ν(NH₂), 1679 δ(NH₂), 2908 ν(CH₂), 2873 ν(CH₃), 1742 ν(C=O) cm⁻¹. ¹³C-NMR (DMSO-d₆): 172.42 (C=O), 103.6 (C-1), 80.6 (C-4), 73.8, 72.2 (C-2,3,5), 63.7 (C-6), 47.9, 29.9, 21.6 (CH₂), 32.8 (CH₃) ppm.

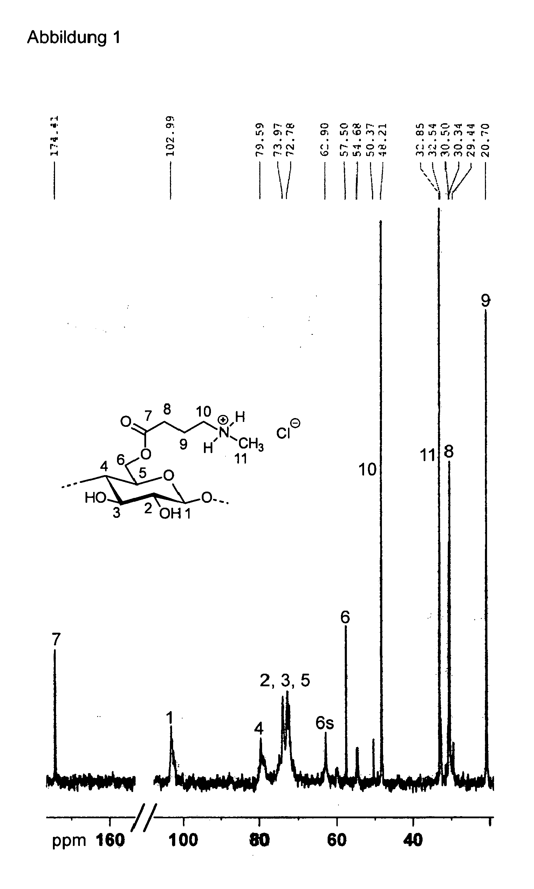

Abbildung 1 zeigt das ¹³C-NMR-Spektrum des erhaltenen Produkts Cellulose-4-[N-Methylamino]buttersäureester-Hydrochlorid.

### Beispiel 3

0,5 g (3 mmol) mikrokristalline Cellulose mit einem durchschnittlichen Polymerisationsgrad von 290 werden in 4,5 g 1-N-Butyl-3-N-methyl-imidazoliumchlorid bei 80°C innerhalb von 12 h gelöst. Nach dem Abkühlen auf 40°C fügt man 1,14 g (6 mmol) Tosylchlorid in 0,58 ml (6 mmol) N-Methyl-2-pyrrolidon zu. Zur Mischung werden nach 5 h Rühren bei 40°C 5 ml Wasser zugefügt und die Reaktion weitere 30 min unter Abkühlung auf Raumtemperatur unter Rühren fortgeführt. Anschließend isoliert man das Produkt durch Fällen in 200 ml einer Mischung aus Aceton und Ethanol (50/50, v/v). Das Polymer wird abfiltriert, zweimal mit 100 ml einer Mischung aus Aceton und Ethanol (50/50, v/v) gewaschen und anschließend bei 60°C im Vakuum (1,5 x 10⁻³ Torr) getrocknet.

Durchschnittlicher Substitutionsgrad 0,51 (2,33% N). Die Probe ist in Wasser und Dimethylsulfoxid löslich.

Ausbeute: 0,35 g (52,2%). IR (KBr): 3369 ν(NH₂), 1691 δ(NH₂), 2922 ν(CH₂), 2892 ν(CH₃), 1749 ν(C=O) cm⁻¹. ¹³C-NMR (DMSO-d₆): 173 (C=O), 100 (C-1), 80 (C-4), 75, 72 (C-2,3,5), 63 (C-6), 48, 30, 20 (CH₂), 33 (CH₃) ppm.

### Beispiel 4

0,5 g (3 mmol) mikrokristalline Cellulose mit einem durchschnittlichen Polymerisationsgrad von 290 werden in 4,5 g 1-N-Butyl-3-N-methyl-imidazoliumchlorid bei 80°C innerhalb von 12 h gelöst. Die Lösung wird mit 5 ml N,N-Dimethylacetamid versetzt und nach dem Abkühlen auf Raumtemperatur fügt man 1,14 g (6 mmol) Tosylchlorid und 0,67 g (6 mmol) ε-Caprolactam zu und lässt die Mischung 5 h bei Raumtemperatur reagieren. Es werden 5 ml Wasser zugefügt und nach weiteren 30 min bei Raumtemperatur unter Rühren isoliert man das Produkt durch Fällen in 200 ml einer Mischung aus Aceton und Ethanol (50/50, v/v). Das Polymer wird abfiltriert, zweimal mit 100 ml einer Mischung aus Aceton und Ethanol (50/50, v/v) gewaschen und anschließend bei 60°C im Vakuum (1,5 x 10⁻³ Torr) getrocknet.

Der durchschnittliche Substitutionsgrad des Produktes ist 1,15, berechnet aus der N-Analyse (4,82% N). Die Probe ist in Wasser und Dimethylsulfoxid löslich.

Ausbeute: 0,95 g (94,8%). IR (KBr): 3427 ν(NH₂), 1626 δ(NH₂), 2930 ν(CH₂), 1737 ν(C=O) cm⁻¹. ¹³C-NMR (DMSO-d₆): 172 (C=O), 102 (C-1), 80 (C-4), 73, 72 (C-2,3,5), 63 (C-6), 49, 30, 21 (CH₂) ppm.

### Beispiel 5

0,5 g (3 mmol) mikrokristalline Cellulose mit einem durchschnittlichen Polymerisationsgrad von 290 werden in 4,5 g 1-N-Butyl-3-N-methyl-imidazoliumchlorid bei 80°C innerhalb von 12 h gelöst. Die Lösung wird mit 5 ml N,N-Dimethylacetamid versetzt und nach dem Abkühlen auf Raumtemperatur fügt man 1,14 g (6 mmol) Tosylchlorid und 0,76 ml (6 mmol) N-Methyl-ε-caprolactam zu. Zur Mischung werden nach 5 h Rühren bei Raumtemperatur 5 ml Wasser zugegeben und die Reaktion weitere 30 min bei Raumtemperatur unter Rühren fortgeführt. Anschließend isoliert man das Produkt durch Fällen in 200 ml einer Aceton/Ethanol-Mischung (50/50, v/v). Das Polymer wird abfiltriert, zweimal mit 100 ml einer Mischung aus Aceton und Ethanol (50/50, v/v) gewaschen und anschließend bei 60°C im Vakuum (1,5 x 10⁻³ Torr) getrocknet.

Das Produkt enthält 4,86% N und besitzt demnach einen durchschnittlichen Substitutionsgrad von 1,17. Die Probe ist in Wasser und Dimethylsulfoxid löslich.

Ausbeute: 0,57 g (56,7%). IR (KBr): 3435 ν(NH₂), 1627 δ(NH₂), 2928 ν(CH₂), 2876 ν(CH₃), 1740 ν(C=O) cm⁻¹. ¹³C-NMR (DMSO-d₆): 172 (C=O), 102 (C-1), 80 (C-4), 73, 72 (C-2,3,5), 63 (C-6), 49, 30, 21 (CH₂), 32 (CH₃) ppm.

### Beispiel 6

0,5 g (3 mmol) mikrokristalline Cellulose mit einem durchschnittlichen Polymerisationsgrad von 290 werden in 4,5 g 1-N-Butyl-3-N-methyl-imidazoliumchlorid bei 80°C innerhalb von 12 h gelöst. Die Lösung wird mit 5 ml N,N-Dimethylacetamid versetzt und nach dem Abkühlen auf Raumtemperatur fügt man 1,14 g (6 mmol) Tosylchlorid in 0,65 ml (6 mmol) N-Methyl-2-piperidon zu. Nach 5 h Rühren bei Raumtemperatur werden 5 ml Wasser zugefügt und die Reaktion weitere 30 min bei Raumtemperatur unter Rühren fortgeführt. Anschließend isoliert man das Produkt durch Fällen in 200 ml einer Mischung aus Aceton und Ethanol (50/50, v/v). Das Polymer wird abfiltriert, zweimal mit 100 ml einer Mischung aus Aceton und Ethanol (50/50, v/v) gewaschen und anschließend bei 60°C im Vakuum (1,5 x 10⁻³ Torr) getrocknet.

Das Produkt enthält 2,98% N, was einem durchschnittlichen Substitutionsgrad von 0,51 entspricht. Die Probe ist in Wasser und Dimethylsulfoxid löslich.

Ausbeute: 0,63 g (88,4%). IR (KBr): 3438 ν(NH₂), 1669 δ(NH₂), 2922 ν(CH₂), 2893 ν(CH₃), 1740 ν(C=O) cm⁻¹. ¹³C-NMR (DMSO-d₆): 170 (C=O), 103 (C-1), 80 (C-4), 73, 72(C-2,3,5), 62.9 (C-6), 49, 30, 21 (CH₂), 32 (CH₃) ppm.

### Beispiel 7

0,5 g (3 mmol) Fichtensulfitzellstoff mit einem durchschnittlichen Polymerisationsgrad von 596 werden in 4,5 g 1-N-Butyl-3-N-methylimidazoliumchlorid bei 80°C innerhalb von 12 h gelöst. Nach dem Abkühlen auf 40°C fügt man 1,14 g (6 mmol) Tosylchlorid in 0,58 ml (6 mmol) NMP zu. Zur Mischung werden nach 5 h Rühren bei 40°C 5 ml Wasser zugegeben und die Reaktion weitere 30 min unter Abkühlung auf Raumtemperatur unter Rühren fortgeführt. Anschließend isoliert man das Produkt durch Fällen in 200 ml einer Mischung aus Aceton und Ethanol (40/60, v/v). Das Polymer wird abfiltriert, zweimal mit 100 ml einer Mischung aus Aceton und Ethanol (40/60, v/v) gewaschen und anschließend bei 60°C im Vakuum (1,5 x 10⁻³ Torr) getrocknet.

Das Produkt enthält 3,3% N, was einem durchschnittlichen Substitutionsgrad von 0,7 entspricht. Die Probe ist in Wasser und Dimethylsulfoxid löslich.

Ausbeute: 0,39 g (58,2%). IR (KBr): 3369 ν(NH₂), 1690 δ(NH₂), 2932 ν(CH₂), 2882 ν(CH₃), 1752 ν(C=O) cm⁻¹. ¹³C-NMR (DMSO-d₆): 100 (C-1), 80 (C-4), 74, 71 (C-2,3,5), 63 (C-6), 175 (C=O), 48, 30, 21 (CH₂), 32 (CH₃) ppm.

### Beispiel 8

0,5 g (3 mmol) Baumwoll-Linters mit einem durchschnittlichen Polymerisationsgrad von 1198 werden in 4,5 g 1-N-Butyl-3-N-methylimidazoliumchlorid bei 80°C innerhalb von 12 h gelöst. Nach dem Abkühlen auf 40°C fügt man 1,14 g (6 mmol) Tosylchlorid in 0,58 ml (6 mmol) NMP zu. Zur Mischung werden nach 5 h Rühren bei 40°C 5 ml Wasser zugegeben und die Reaktion weitere 30 min unter Abkühlung auf Raumtemperatur unter Rühren fortgeführt. Anschließend isoliert man das Produkt durch Fällen in 200 ml einer Mischung aus Aceton und Ethanol (40/60, v/v). Das Polymer wird abfiltriert, zweimal mit 100 ml einer Mischung aus Aceton und Ethanol (40/60, v/v) gewaschen und anschließend bei 60°C im Vakuum (1,5 x 10⁻³ Torr) getrocknet.

Das Produkt enthält 2,26% N, durchschnittlicher Substitutionsgrad 0,48 entspricht. Die Probe ist in Wasser und Dimethylsulfoxid löslich.

Ausbeute: 0,29 g (43,3%). IR (KBr): 3372 ν(NH₂), 1695 δ(NH₂), 2936 ν(CH₂), 2896 ν(CH₃), 1748 ν(C=O) cm⁻¹. ¹³C-NMR (DMSO-d₆): 101 (C-1), 80 (C-4), 74, 71 (C-2,3,5), 62 (C-6), 173 (C=O), 48, 29, 21 (CH₂), 33 (CH₃) ppm.

## Patentansprüche

1. Verfahren zur Herstellung von aminogruppenhaltigen Cellulosederivaten umfassend die Umsetzung von Cellulose mit einem Lactam der allgemeinen Formel (I): 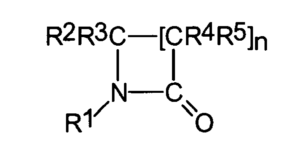 mit n = 2, 3, 4 oder größer; R¹ = H oder einem organischen Rest; und R², R³, R⁴ und R⁵ jeweils unabhängig voneinander = H oder einem organischen Rest; wobei die Umsetzung in einem Lösungsmittel durchgeführt wird, **dadurch gekennzeichnet, dass** das Lösungsmittel eine ionische Flüssigkeit enthält oder daraus besteht.

2. Verfahren nach Anspruch 1, wobei die Konzentration der eingesetzten Cellulose bezogen auf die ionische Flüssigkeit 2 bis 35 Gew.-% beträgt.

3. Verfahren nach Anspruch 1 oder 2, wobei das Lactam durch eine organische Lewis-Säure aktiviert wird.

4. Verfahren nach Anspruch 3, wobei die organische Lewis-Säure ein Sulfonsäurechlorid ist.

5. Verfahren nach Anspruch 3 oder 4, wobei das Molverhältnis Lactam zu Lewis-Säure im Bereich von 1:0,4 bis 1:2 liegt.

6. Verfahren nach einem der Ansprüche 3 bis 5, wobei das Molverhältnis Anhydroglucoseeinheit zu Lactam im Bereich von 1:1 bis 1:4 liegt.

7. Verfahren nach einem der vorherigen Ansprüche, wobei die eingesetzte Cellulose einen Durchschnittspolymerisationsgrad DPₙ von 200 bis 5000 aufweist.

8. Verfahren nach einem der vorherigen Ansprüche, wobei die Umsetzung der Cellulose mit dem Lactam bei Temperaturen im Bereich von 10 bis 80 °C durchgeführt wird.

9. Verfahren nach einem der vorherigen Ansprüche, wobei die eingesetzte Cellulose aus Chemiezellstoff, Papierzellstoff, mikrokristalliner Cellulose, Linterscellulose oder Bakteriencellulose gewonnen wird.

10. Verfahren nach einem der vorherigen Ansprüche, wobei die ionische Flüssigkeit eine Imidazoliumverbindung der allgemeinen Formel (II) ist: 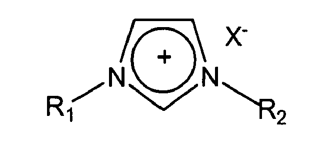 mit X⁻ = Anion und wobei R₁ und R₂ unabhängig voneinander organische Substituenten, vorzugsweise aliphatische Substituenten mit 1 bis 4 C-Atomen, sind.

11. Verfahren nach Anspruch 10, wobei die ionische Flüssigkeit 1-N-Butyl-3-N-methyl-imidazoliumchlorid ist.

12. Verfahren nach einem der vorherigen Ansprüche, wobei das Lactam ein Lactam der allgemeinen Formel (I) mit n = 2, 3 oder 4; R¹ = H oder Alkyl; und R², R³, R⁴ und R⁵ jeweils = H ist.

13. Verfahren nach einem der vorherigen Ansprüche, wobei das Lactam N-Methyl-2-pyrrolidon, ε-Caprolactam, N-Methyl-ε-Caprolactam oder N-Methyl-2-piperidon ist.

14. Verfahren nach einem der vorherigen Ansprüche, umfassend die Schritte:
a) Lösen der Cellulose in der ionischen Flüssigkeit oder dem Lösungsmittel enthaltend die ionische Flüssigkeit;
b) Zugabe des Lactams zur Lösung aus Schritt a),
c) gegebenenfalls Zugabe der organischen Lewis-Säure zur nach Schritt b) erhaltenen Lösung, oder Zugabe der Lewis-Säure zunächst zum Lactam und anschließende Zugabe des erhaltenen Gemisches zur Lösung aus Schritt a),
d) Reagieren lassen unter Rühren, und
e) Isolieren des Produkts nach dem Beendigen der Reaktion.

15. Verfahren nach Anspruch 14, wobei die Schritte b), c) und/oder d) bei Temperaturen im Bereich von 10 bis 80°C durchgeführt werden.

16. Verfahren nach einem der vorherigen Ansprüche, wobei kein Pyridin während der Umsetzung der Cellulose mit dem Lactam in der Reaktionslösung enthalten ist.

17. Verfahren nach einem der vorherigen Ansprüche, wobei die ionische Flüssigkeit recyclisiert wird.

18. Aminogruppenhaltige Cellulosederivate herstellbar durch das Verfahren nach einem der Ansprüche 1 bis 16.
